# EUROPÄISCHE PATENTSCHRIFT

(11) **EP 2 934 930 B1**
(45) Veröffentlichungstag und Bekanntmachung des Hinweises auf die Patenterteilung: **23.08.2017**
(21) Anmeldenummer: 13802660.4
(22) Anmeldetag: 11.12.2013
(51) Int. Cl.: B60K 6/448, B60K 6/46, B60W 10/06, B60W 10/08, F02D 41/14, F02D 41/00, B60W 20/00, B60W 40/12

(54) **VERFAHREN ZUM ERMITTELN EINES DREHWINKELS EINER WELLE, VERFAHREN ZUR REGELUNG EINER MOTORANORDNUNG, STEUERGERÄT UND MOTORANORDNUNG FÜR EIN FAHRZEUG**
METHOD FOR DETERMINING AN ANGLE OF ROTATION OF A SHAFT, METHOD FOR CONTROLLING A MOTOR ARRANGEMENT, CONTROL DEVICE AND MOTOR ARRANGEMENT FOR A VEHICLE
PROCÉDÉ DE DÉTERMINATION D'UN ANGLE DE ROTATION D'UN ARBRE, PROCÉDÉ DE RÉGULATION D'UN ENSEMBLE MOTEUR, APPAREIL DE COMMANDE ET ENSEMBLE MOTEUR POUR VÉHICULE

(30) Priorität: 21.12.2012 DE 102012224296
(43) Veröffentlichungstag der Anmeldung: 28.10.2015
(73) Patentinhaber: Continental Automotive GmbH, 30165 Hannover (DE)
(72) Erfinder: RAUSCHECKER, Robert, 91522 Ansbach (DE); PRENNINGER, Martin, 93051 Regensburg (DE)
(86) Internationale Anmeldenummer: PCT/EP2013/076238
(87) Internationale Veröffentlichungsnummer: WO 2014/095525

(56) Entgegenhaltungen:
- DE-A1- 4 133 059
- DE-A1-102008 000 869
- DE-A1-102010 035 612
- US-A1- 2002 092 499
- US-A1- 2012 239 348

## Beschreibung

Die Anmeldung betrifft ein Verfahren zum Ermitteln eines Drehwinkels einer Welle und ein Verfahren zur Regelung einer Motoranordnung aus einer elektrischen Maschine und einer durch eine gemeinsame Welle mit der elektrischen Maschine verbundenen Brennkraftmaschine. Sie betrifft weiter ein Steuergerät und eine Motoranordnung für ein Fahrzeug.

Bei elektrisch betriebenen Fahrzeugen wird häufig ein sogenanntes Reichweitenverlängerungsmodul (Range-Extender-Modul) eingesetzt. Dabei treibt eine Brennkraftmaschine eine elektrische Maschine an, um so elektrische Energie zu erzeugen, die von einem Elektromotor verwendet wird, um das Fahrzeug anzutreiben. Dabei ist die Brennkraftmaschine zumeist für eine bestimmte Drehzahl optimiert. Wenn das Reichweitenverlängerungsmodul in Betrieb genommen werden soll, wird deshalb häufig die elektrische Maschine zunächst als Motor verwenden, um die Welle zwischen der elektrischen Maschine und der Brennkraftmaschine (und damit die elektrische Maschine und die Brennkraftmaschine) auf die gewünschte Drehzahl zu bringen, für die die Brennkraftmaschine optimiert ist, und dann die Brennkraftmaschine zu starten. Um den Zündvorgang im richtigen Moment zu beginnen, ist es jedoch notwendig, den Drehwinkel der Welle zu kennen. Hierfür werden in der Regel Sensoren eingesetzt, die Kosten verursachen und kaputt gehen können.

Aus der DE 601 15 760 T2 beispielsweise ist eine Motorsteuerung bekannt, die die Motordrehzahl und den Kraftstoffeinspritzzeitpunkt auf der Basis von Drehwinkelsensoren bzw. Rotorpositionssensoren an der Kurbelwelle berechnet.

Die Druckschrift US 2012/0239348 A1 beschreibt ein Verfahren zur Überwachung des Zustands eines Antriebs, wobei anhand von Strom- und Spannungssignalen eine magnetische Flussverteilung innerhalb der elektrischen Maschine des Antriebs als eine Kombination einer Vielzahl harmonischer Flüsse virtueller elektrischer Maschinen dargestellt wird.

Die Druckschrift DE 4133058 A1 betrifft eine Antriebsanordnung, bei der ein Ist-Wert der Drehzahl der Brennkraftmaschine sowie der Ist-Wert der Leistung erfasst wird, welche eine Generatoranordnung erzeugt. Eine Steuerung der Antriebsanordnung verwendet Kennfelddaten, die als Kombinationen von Leistungs-Sollwerten und Drehzahl-Sollwerten gegeben sind.

Die Druckschrift DE 10 2010 035 612 A1 beschreibt eine Detektierungsvorrichtung zum Detektieren von Fehlzündungen eines Verbrennungsmotors, wobei ein mit dem Verbrennungsmotor verbundener Generator Abweichungen ermittelt, die auf Fehlzündungen hindeuten. Hierbei werden Ist-Werte mit Soll-Werten verglichen, die von einem Drehzahlregler vorgegeben werden.

Die Druckschrift DE 10 2008 000 869 A1 beschreibt ein Verfahren zur Kalibrierung eines Verbrennungsmotors, wobei eine elektrische Maschine mit dem Verbrennungsmotor gekoppelt ist und das Drehmoment des Verbrennungsmotors in einem Betriebspunkt durch Vergleich mit einem bekannten Drehmoment der elektrischen Maschine bestimmt wird.

Die Druckschrift US 2002/092499 A1 betrifft ein Verfahren zum Ermitteln einer Kurbelwellenposition, wobei ein Pulssensor ein Signal ausgehend Vibrationen erzeugt, die durch einen Motorblock übertragen werden. Anhand des Signals werden Verbrennungsereignisse identifiziert, um eine Referenz-Kurbelwellenposition zu ermitteln durch Korrelieren der einzelnen Verbrennungsereignisse.

Es sind auch sensorlose Regelungen bekannt, die die Motordrehzahl und den Drehwinkel einer Drehstrommaschine auf der Basis von induktiven Anteilen und Widerstandsanteilen der Statorströme ermitteln. Sie beruhen darauf, dass bei einem Andrehen der elektrischen Maschine durch den Verbrennungsmotor der Rotor in das elektrische Feld einkoppelt und sich durch das Mitdrehen des Rotors die induktiven und Widerstandsanteile der Statorströme ändern. Dabei ist jedoch ein Betrieb der Brennkraftmaschine notwendig.

Aufgabe der Erfindung ist es, ein Verfahren anzugeben, das in jedem Betriebszustand einer Motoranordnung aus einer elektrischen Maschine und einer mit ihr verbundenen Brennkraftmaschine zuverlässig und mit ausreichender Genauigkeit die Ermittlung des Drehwinkels der Welle und die Regelung der Motoranordnung erlaubt. Ferner soll ein Steuergerät und eine Motoranordnung mit einem Steuergerät angegeben werden, das robust und kostgünstig ist und sich für die zuverlässige Regelung einer Motoranordnung aus einer elektrischen Maschine und einer mit ihr verbundenen Brennkraftmaschine, insbesondere auch eines Reichweitenverlängerungs-moduls (Range-Extender-Moduls), eignet.

Diese Aufgaben werden mit den Gegenständen der unabhängigen Ansprüche gelöst. Vorteilhafte Weiterbildungen ergeben sich aus den abhängigen Ansprüchen.

Gemäß einem Aspekt der Erfindung wird ein Verfahren zum Ermitteln eines Drehwinkels einer Welle angegeben, wobei die Welle eine elektrische Maschine mit einer Brennkraftmaschine koppelt. Das Verfahren umfasst das Bestimmen eines zeitlichen Verlaufs eines durch die elektrische Maschine bereitgestellten Drehmoments aus Statorströmen der elektrischen Maschine. Es umfasst ferner das Auswerten des zeitlichen Verlaufs, um ein vom Drehwinkel der Welle abhängiges Muster des zeitlichen Verlaufs des durch die elektrische Maschine bereitgestellten Drehmoments zu erkennen, und das Bestimmen des Drehwinkels der Welle aufgrund eines momentanen bereitgestellten Drehmoments und des Musters.

Dabei wird hier und im Folgenden unter dem Drehwinkel der Welle ein Indikator für die absolute Lage der im Betrieb rotierenden Welle verstanden. Das verwendete Koordinatensystem ist dabei unerheblich. Es muss nicht notwendigerweise ein Wert für den Drehwinkel selbst bestimmt werden, beispielsweise können auch die davon abhängigen momentanen Betriebszustände der Zylinder, z.B. ihre Kolbenpositionen, ermittelt werden.

Hier und im Folgenden wird unter einem vom Drehwinkel der Welle abhängigen Muster ein Muster verstanden, dessen Auswertung Rückschlüsse auf den Drehwinkel der Welle zu einem bestimmten Zeitpunkt erlaubt. Die Auswertung kann insbesondere eine Analyse der Form des Musters, also beispielsweise seiner Amplitude und/oder seines zeitlichen Verlaufs, oder des Zeitpunkts seines Auftretens im zeitlichen Verlauf des Drehmoments beinhalten.

Bei diesem Verfahren wird die Tatsache ausgenutzt, dass die elektrische Maschine und die Brennkraftmaschine durch die gemeinsame Welle miteinander gekoppelt sind. Vorgänge in den Zylindern während der Kompression bzw. Zündung beeinflussen das durch die elektrische Maschine bereitzustellende Drehmoment: Befindet sich einer der Zylinder im oberen Totpunkt und ist an der Reihe zu zünden, werden über die Nockenwelle die Ventile geschlossen und der Zylinder benötigt im Vergleich zu einer Situation mit freilaufendem Kolben mehr Energie zur Kompression des eingeschlossenen Gases. Der Zeitpunkt dieser Kompression ist somit im zeitlichen Verlauf des Drehmoments als Spitze erkennbar.

Um jedoch den absoluten Wert des Drehwinkels der Kurbel- bzw. Nockenwelle bestimmen zu können, wird das vom Drehwinkel abhängige Muster im zeitlichen Verlauf des Drehmoments identifiziert. Dem zeitlichen Verlauf des Drehmoments ist dann nicht nur zu entnehmen, zu welchen Zeitpunkten irgendein Zylinder im oberen Totpunkt ist, sondern auch, welcher der Zylinder. Auf diese Weise können die Einspritzzeitpunkte für die Zylinder optimiert werden.

Das Verfahren nutzt somit in zumindest einem Schritt die Kopplung der elektrischen Maschine und der Brennkraftmaschine über die Welle aus. Diese Kopplung ist besonders einfach, wenn keine Übersetzung zwischen den Maschinen stattfindet, sondern diese mit gleichen Drehzahlen betrieben werden. Prinzipiell ist das Verfahren jedoch auch anwendbar, wenn zwischen den Maschinen ein Getriebe vorgesehen ist.

Das Verfahren ermöglicht somit eine sensorlose Bestimmung der absoluten Lage der Kurbelwelle, das heißt ihres Drehwinkels. Es kann demnach auf Winkelsensoren sowohl bei der elektrischen Maschine als auch bei der Brennkraftmaschine verzichtet werden. Die Motoranordnung ist somit besonders kostengünstig, weniger fehleranfällig und benötigt weniger Bauraum.

Das Verfahren kann zudem als Ergänzung genutzt werden, um bei vorhandenen Rotorpositionssensoren eine unabhängige Sicherheitsprüfung und eine Möglichkeit für einen Notbetrieb bei einem Sensorausfall zur Verfügung zu stellen.

Diese Vorteile wirken sich besonders günstig bei sogenannten Range-Extender-Modulen (Reichweitenverlängerungsmodulen) aus, bei denen die Reichweite eines elektrisch angetriebenen Hybridfahrzeugs durch eine Brennkraftmaschine, die einen Generator betreibt, erhöht werden kann. Range Extender-Module werden häufig an bislang ungenutzten Orten im Fahrzeug eingebaut, beispielsweise im Bereich des Kofferraums. Ein geringer Bauraum stellt somit einen großen Vorteil dar.

Das Verfahren ist jedoch auch einsetzbar bei herkömmlichen Brennkraftmaschinen, die mit einem Startergenerator oder einer Lichtmaschine als Antrieb ausgestattet sind.

Bei einem Einzylinder- oder Wankelmotor ist nur eine einzige Einspritzvorrichtung vorhanden. Die Bestimmung des Drehwinkels ist somit unproblematisch. Der obere Totpunkt des einzigen Zylinders ist identisch mit der einzigen Spitze im zeitlichen Verlauf des Drehmoments.

In einer Ausführungsform weist der zeitliche Verlauf des Drehmoments Ausschläge auf, wenn in einem Zylinder der Brennkraftmaschine eine Kompression stattfindet. Für eine unregelmäßige Zündfolge, wie sie beispielsweise bei Motorrädern eingesetzt wird, ist auch die Abfolge der oberen Totpunkte unregelmäßig. Da die zeitliche Abfolge der oberen Totpunkte bzw. der jeweilige zeitliche Abstand zwischen dem Erreichen der oberen Totpunkte bekannt ist, kann aus der Abfolge der Ausschläge im zeitlichen Verlauf des Drehmoments darauf geschlossen werden, welcher Zylinder jeweils bereit zur Zündung ist.

In einer Ausführungsform umfasst die Brennkraftmaschine mehrere Zylinder und eine Zündfolge der Zylinder weist mindestens eine Unregelmäßigkeit auf. Der Schritte des Auswertens des zeitlichen Verlaufs verwendet die Unregelmäßigkeit, um ein vom Drehwinkel der Welle abhängiges Muster des zeitlichen Verlaufs des durch die elektrische Maschine bereitgestellten Drehmoments zu erkennen. Diese Ausführungsform eignet sich bei Mehrzylindermotoren um festzustellen, welcher der Zylinder jeweils im oberen Totpunkt ist.

Dazu kann folgendermaßen vorgegangen werden: Über die Regelung der elektrischen Maschine wird ein "Ruckelmuster" bei einer Drehmomentspitze erzeugt. Das heißt, es wird eine Variation des durch die elektrische Maschine bereitgestellten Drehmoments zu dem Zeitpunkt vorgenommen, zu dem sich einer der Zylinder im oberen Totpunkt befindet. Die Vibration der so stimulierten Welle wird über gleichfrequente oder harmonische Schwingungen mit dem Klopfsensor aufgenommen. Mit Hilfe des bekannten Verbauorts des Klopfsensors kann dann der zur Zündung bereite Zylinder bestimmt werden. Bei dieser Ausführungsform wird somit der Drehwinkel über eine gezielte Drehmomentstimulation über die Welle und eine Detektion dieser Stimulation über den Klopfsensor bestimmt.

Anstelle der Signale des Klopfsensors können auch Messwerte des Zündkerzenstroms verwendet werden. Der Zündkerzenstrom ist abhängig vom Umgebungsdruck. Die durch die Stimulation erzeugten Vibrationen führen zu Druckschwankungen in den Zylindern bzw. zu einer Zylinderdruckerhöhung und können mittels einer Bestimmung des Zündkerzenstroms aufgenommen werden.

Die Genauigkeit des Verfahrens kann in beiden Varianten verbessert werden, wenn eine Stimulation während mehrerer Drehmomentspitzen durchgeführt und die Amplituden der jeweiligen Klopfsensorsignale bzw. Zündkerzenströme in die Auswertung einbezogen werden.

In einer Ausführungsform wird zusätzlich der zeitliche Verlauf des Zündkerzenstroms der Brennkraftmaschine bestimmt, anhand dessen ebenfalls ein vom Drehwinkel der Welle abhängiges Muster erkannt werden kann. Bei dieser Ausführungsform wird eine Verbesserung der Winkelgenauigkeit dadurch erzielt, dass der zeitliche Verlauf aller Zündkerzenströme aufgenommen wird. Ebenso wie im zeitlichen Verlauf des Drehmoments zeigen die Zündkerzenströme Spitzen zu den Zeitpunkten, in denen der jeweilige Zylinder im oberen Totpunkt ist.

Weitere Verbesserungen können durch die Einbeziehung von Messwerten eines Luftmassensensors und des Lambdasensors erreicht werden.

In einer Ausführungsform wird ein Zylinder der Brennkraftmaschine vorgeheizt. Diese Ausführungsform eignet sich für die Anwendung bei Dieselmotoren. Sie nutzt die Tatsache aus, dass während der Kompression die Reibung im beheizten Zylinder niedriger ausfällt als in den kühleren Zylindern, so dass das durch die elektrische Maschine bereitzustellende Drehmoment niedriger ist als in einem unbeheizten Zylinder. Die Spitze im zeitlichen Verlauf des Drehmoments fällt demnach bei dem beheizten Zylinder kleiner aus.

In einer Ausführungsform wird eine Kraftstoffeinspritzung an einem Zylinder der Brennkraftmaschine durchgeführt und anhand des zeitlichen Verlaufs des durch die elektrische Maschine bereitgestellten Drehmoments wird ermittelt, ob eine Zündung stattfindet. Dies kann aufgrund des durch die Zündung im zeitlichen Verlauf des Drehmoments erzeugten Musters erfolgen.

Dieses Vorgehen eignet sich für einen Notbetrieb der Motoranordnung, beispielsweise bei einem Ausfall von Sensoren. Prinzipiell sind Fehlzündungen zu vermeiden, weshalb dieses Verfahren sich bei den meisten Fahrzeugen nicht für den Normalbetrieb eignet. Es stellt jedoch eine Möglichkeit dar, wie die Motorsteuerung auch bei einem Ausfall von Sensoren aufrechterhalten werden kann.

Beispielsweise kann das Verfahren auch zum Notbetrieb herkömmlicher Brennkraftmaschinen dienen, die mit einem Startergenerator oder einer Lichtmaschine gekoppelt sind, wenn alle Rotorpositionssensoren ausfallen.

Gemäß einem Aspekt der Erfindung wird ein Verfahren zur sensorlosen Regelung einer Anordnung aus einer elektrischen Maschine und einer durch eine gemeinsame Welle mit der elektrischen Maschine verbundenen Brennkraftmaschine angegeben, wobei das Verfahren das Bestimmen einer Drehzahl der elektrischen Maschine durch Auswerten eines zeitlichen Verlaufs des durch die elektrische Maschine bereitgestellten Drehmoments und das Bestimmen eines Drehwinkels der Welle mittels des beschriebenen Verfahrens umfasst.

Dieses Verfahren ermöglicht es, bei einer Motoranordnung aus einer elektrischen Maschine und einer Brennkraftmaschine auf Rotorpositionssensoren zu verzichten. Es ermöglicht die sensorlose Regelung beider Maschinen, insbesondere auch die Bestimmung der Einspritzzeitpunkte für die Brennkraftmaschine.

Gemäß einem weiteren Aspekt der Erfindung wird ein Steuergerät für ein Fahrzeug zum Ermitteln eines Drehwinkels einer Welle bereitgestellt, wobei die Welle eine elektrische Maschine mit einer Brennkraftmaschine koppelt und wobei das Steuergerät zumindest eine Empfangsvorrichtung ausgebildet zum Empfangen von Messwerten für Statorströme der elektrischen Maschine aufweist. Das Steuergerät weist ferner eine erste Ermittlungsvorrichtung auf, die ausgebildet ist zum Bestimmen eines zeitlichen Verlaufs eines durch die elektrische Maschine bereitgestellten Drehmoments aus den Statorströmen der elektrischen Maschine. Das Steuergerät weist ferner eine zweite Ermittlungsvorrichtung auf, die ausgebildet ist zum Auswerten des zeitlichen Verlaufs, um ein vom Drehwinkel der Welle abhängiges Muster des zeitlichen Verlaufs des durch die elektrische Maschine bereitgestellten Drehmoments zu erkennen, und zum Bestimmen des Drehwinkels der Welle aufgrund eines momentanen bereitgestellten Drehmoments und des Musters.

In einer Ausführungsform weist das Steuergerät zumindest eine Steuereinrichtung zur Steuerung der Statorströme der elektrischen Maschine auf. Diese Steuereinrichtung kann dazu genutzt werden, das Muster im zeitlichen Verlauf des Drehmoments zu erzeugen, indem dem bereitgestellten Drehmoment beispielsweise ein "Ruckelmuster" eingeprägt wird.

In einer Ausführungsform ist die Empfangsvorrichtung ferner ausgebildet zum Empfangen zumindest eines weiteren Parameters, der ausgewählt ist aus der Gruppe bestehend aus Messwerten für den Zündkerzenstrom, Signalen eines Klopfsensors, Signalen eines Luftmassensensors und Signalen einer Lambdasonde. Mit Hilfe dieser Sensoren lässt sich die Genauigkeit des Verfahrens zur sensorlosen Regelung erhöhen.

Gemäß einem Aspekt der Erfindung wird eine Motoranordnung für ein Fahrzeug bereitgestellt, die eine elektrische Maschine und eine über eine gemeinsame Welle mit der elektrischen Maschine verbundene Brennkraftmaschine aufweist, wobei die Motoranordnung ferner das beschriebene Steuergerät zur Steuerung der elektrischen Maschine und der Brennkraftmaschine aufweist.

Die Motoranordnung kann beispielsweise als Motoranordnung eines Hybridfahrzeugs ausgebildet sein, wobei die Brennkraftmaschine als Range Extender (Reichweitenverlängerer) für den Elektromotor ausgebildet ist. Die Motoranordnung kann jedoch auch als herkömmliche Brennkraftmaschine mit einer Lichtmaschine oder einen Startergenerator ausgebildet sein.

Die Erfindung wurde mit Bezug auf ein Verfahren, ein Steuergerät sowie eine Motoranordnug erläutert. Sofern nichts anderes angegeben ist, sind die Erläuterungen eines Erfindungsgegenstandes analog auf die anderen Erfindungsgegenstände anwendbar. Das heißt insbesondere, dass das Steuergerät natürlich die entsprechenden Mittel aufweist, um die beschriebenen Verfahrensschritte ausführen zu können.

Ausführungsformen der Erfindung werden nun anhand der beigefügten Figuren näher erläutert.
- Figur 1: zeigt schematisch ein Fahrzeug mit einer Motoranordnung gemäß einer Ausführungsform der Erfindung;
- Figur 2: zeigt ein Flussdiagramm eines Verfahrens gemäß einer Ausführungsform der Erfindung und
- Figur 3: zeigt schematisch ein Steuergerät gemäß einer Ausführungsform der Erfindung.

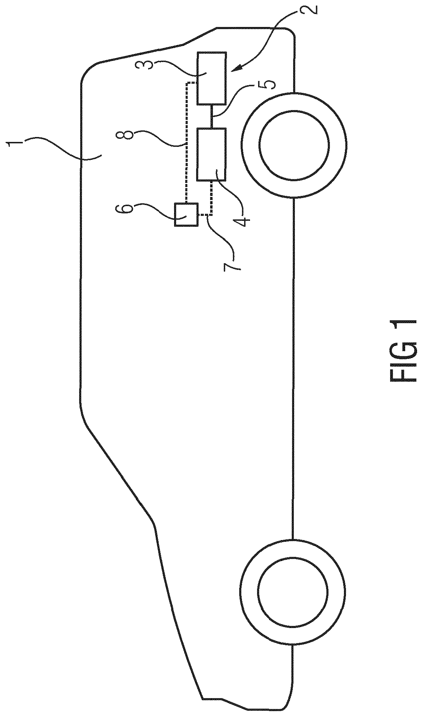

Figur 1 zeigt ein Fahrzeug 1, das in der gezeigten Ausführungsform als Hybridfahrzeug ausgebildet ist. Es weist eine Motoranordnung 2 in seinem Heckbereich auf, die eine elektrische Maschine und eine Brennkraftmaschine umfasst, die miteinander durch eine gemeinsame Welle 5 gekoppelt sind. Die Motoranordnung 2 kann auch in einem anderen Bereich des Fahrzeugs 1, beispielsweise im Frontbereich, vorgesehen sein.

Die elektrische Maschine 3 ist beispielsweise als permanenterregte Synchronmaschine ausgebildet, sie kann jedoch auch als fremderregte Synchronmaschine oder als Asynchronmaschine ausgebildet sein. Die Brennkraftmaschine 4 ist in der gezeigten Ausführungsform als Range Extender ausgebildet und liefert über die als Generator betriebene elektrische Maschine 3 elektrische Energie, wenn nicht gezeigte elektrische Speicher erschöpft sind. Sie kann jedoch auch als herkömmlicher Antriebsmotor in Otto- oder Dieselmotorbauweise, als Rotationskolbenmotor oder Motor einer anderen Bauart ausgebildet sein.

Die Welle 5 verbindet die elektrische Maschine 3 und die Brennkraftmaschine 4 starr miteinander. In einer nicht gezeigten Ausführungsform ist ein Getriebe und/oder eine Kupplung zwischen der elektrischen Maschine 3 und der Brennkraftmaschine 4 vorgesehen.

Die Motoranordnung 2 wird durch ein Steuergerät 6 angesteuert. Dazu ist das Steuergerät 6 über nur schematisch dargestellte Signalleitungen 7 bzw. 8 mit der Brennkraftmaschine 4 bzw. der elektrische Maschine 3 verbunden. Das Steuergerät 6 steuert sowohl die Brennkraftmaschine 4 als auch die elektrische Maschine 3 an und erhält dazu Messwerte verschiedener, nicht dargestellter Sensoren, insbesondere, um die Statorströme der elektrischen Maschine 3 und den Einspritzzeitpunkt der Brennkraftmaschine 4 zu ermitteln.

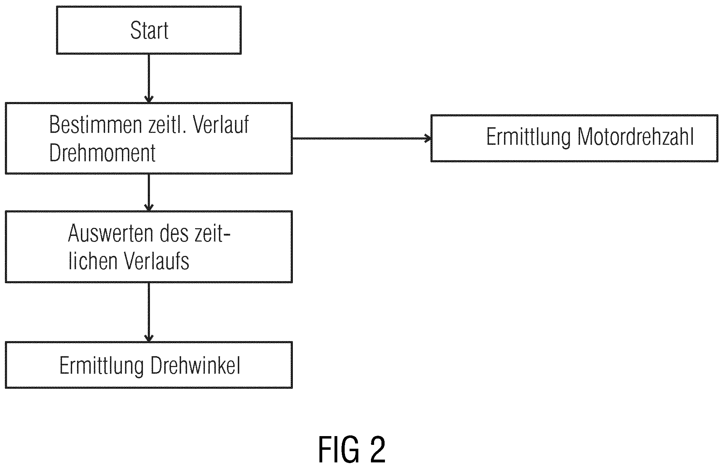

Figur 2 zeigt ein Flussdiagramm eines Verfahrens zur sensorlosen Steuerung der Motoranordnung 2. In diesem Verfahren wird zunächst der zeitliche Verlauf des durch die elektrische Maschine 3 bereitgestellten Drehmoments bestimmt. Aufgrund der Kopplung zwischen elektrischer Maschine 3 und Brennkraftmaschine 4 lassen sich anhand dieses Drehmomentverlaufs die Zeitpunkte identifizieren, zu denen sich einer der Zylinder der Brennkraftmaschine 4 in einem oberen Totpunkt befindet. Zu diesen Zeitpunkten tritt eine Spitze im zeitlichen Verlauf des Drehmoments auf. Anhand mehrerer Spitzen lässt sich auch die Motordrehzahl ermitteln.

Ist der zeitliche Verlauf des Drehmoments bestimmt, wird er ausgewertet, um ein vom Drehwinkel der Welle abhängiges Muster des zeitlichen Verlaufs des durch die elektrische Maschine bereitgestellten Drehmoments zu erkennen, aufgrund dessen der Drehwinkel der Welle bestimmt werden kann.
Schließlich kann der Drehwinkel der Welle 5 aus der Analyse des erkannten Musters ermittelt werden. Insbesondere kann bestimmt werden, welcher der Zylinder der Brennkraftmaschine 4 zu welchem Zeitpunkt im oberen Totpunkt ist. Damit ist die absolute Lage der Welle 5 bekannt.

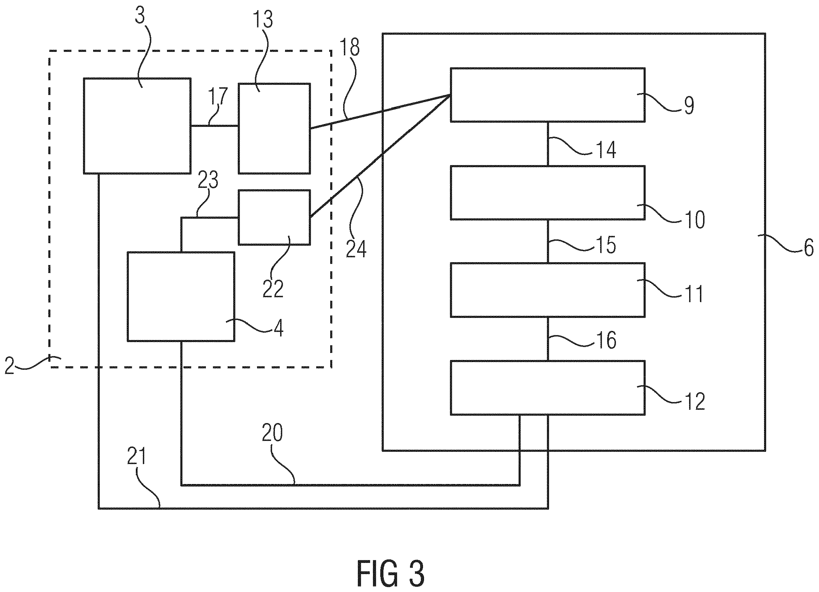

Figur 3 zeigt schematisch ein Steuergerät 6 für die Motoranordnung 2 gemäß einer Ausführungsform der Erfindung. Das Steuergerät 6 umfasst eine Empfangsvorrichtung 9
zum Empfangen von Sensordaten der Motoranordnung 2, insbesondere von Messwerten für die Statorströme der elektrischen Maschine 3. Der Sensor 13 ist exemplarisch gezeigt, er ist durch Signalleitungen 17 und 18 mit der elektrischen Maschine 3 bzw. der Empfangsvorrichtung 9 verbunden.

Auch an der Brennkraftmaschine 4 können Sensoren angeordnet sein, wobei hier exemplarisch ein Sensor 22 gezeigt ist, der über Signalleitungen 23 und 24 mit der Brennkraftmaschine 4 und der Empfangsvorrichtung 9 verbunden ist. Ein derartiger Sensor 22 kann beispielsweise ein Klopfsensor sein oder eine Einrichtung zur Ermittlung des Zündkerzenstroms.

Das Steuergerät 6 umfasst ferner eine erste Ermittlungsvorrichtung 10 ausgebildet zum Bestimmen des zeitlichen Verlaufs des durch die elektrische Maschine 3 bereitgestellten Drehmoments aus den Statorströmen der elektrischen Maschine 3 und eine zweite Ermittlungsvorrichtung 11 ausgebildet zum Auswerten des zeitlichen Verlaufs, um ein vom Drehwinkel der Welle 5 abhängiges Muster des zeitlichen Verlaufs des durch die elektrische Maschine 3 bereitgestellten Drehmoments zu erkennen, und zum Bestimmen des Drehwinkels der Welle 5 aufgrund eines momentanen bereitgestellten Drehmoments und des Musters.

Ferner umfasst das Steuergerät 6 eine Steuereinrichtung 12. Die Steuereinrichtung 12 ist zur Steuerung bzw. Regelung der Motoranordnung 2 ausgebildet, insbesondere auch zur Steuerung der Statorströme der elektrischen Maschine 3.

Zur Verbindung der Empfangsvorrichtung 9, der ersten Ermittlungsvorrichtung 10, der zweiten Ermittlungsvorrichtung 11 und der Steuereinrichtung 12 sind Signalleitungen 14 bis 16 vorgesehen.

Die Steuereinrichtung 12 ist über Signalleitungen 20 bzw. 21 mit der Brennkraftmaschine 4 bzw. der elektrischen Maschine 3 verbunden.

### Bezugszeichenliste

- 1: Fahrzeug
- 2: Motoranordnung
- 3: elektrische Maschine
- 4: Brennkraftmaschine
- 5: Welle
- 6: Steuergerät
- 7: Signalleitung
- 8: Signalleitung
- 9: Empfangsvorrichtung
- 10: erste Ermittlungsvorrichtung
- 11: zweite Ermittlungsvorrichtung
- 12: Steuereinrichtung
- 13: Sensor
- 14: Signalleitung
- 15: Signalleitung
- 16: Signalleitung
- 17: Signalleitung
- 18: Signalleitung
- 20: Signalleitung
- 21: Signalleitung
- 22: Signalleitung
- 23: Sensor
- 24: Signalleitung

## Patentansprüche

1. Verfahren zum Ermitteln eines Drehwinkels einer Welle (5), wobei die Welle (5) eine elektrische Maschine (3) mit einer Brennkraftmaschine (4) koppelt, wobei das Verfahren folgendes umfasst:
- Bestimmen eines zeitlichen Verlaufs eines durch die elektrische Maschine (3) bereitgestellten Drehmoments aus Statorströmen der elektrischen Maschine (3) ;
- Auswerten des zeitlichen Verlaufs, um ein vom Drehwinkel der Welle (5) abhängiges Muster des zeitlichen Verlaufs des durch die elektrische Maschine (3) bereitgestellten Drehmoments zu erkennen, und
- Bestimmen des Drehwinkels der Welle (5) aufgrund eines momentanen bereitgestellten Drehmoments und des Musters.

2. Verfahren nach Anspruch 1,
wobei der zeitliche Verlauf des Drehmoments Ausschläge aufweist, wenn in einem Zylinder der Brennkraftmaschine (4) eine Kompression stattfindet.

3. Verfahren nach Anspruch 1 oder 2,
wobei die Brennkraftmaschine (4) mehrere Zylinder umfasst und eine Zündfolge der Zylinder mindestens eine Unregelmäßigkeit aufweist,
wobei der Schritte des Auswertens des zeitlichen Verlaufs die Unregelmäßigkeit verwendet, um ein vom Drehwinkel der Welle (5) abhängiges Muster des zeitlichen Verlaufs des durch die elektrische Maschine (3) bereitgestellten Drehmoments zu erkennen.

4. Verfahren nach Anspruch 3,
wobei eine Variation des durch die elektrische Maschine (3) bereitgestellten Drehmoments zu Vibrationen führt, die mittels eines Klopfsensors und/oder eines Sensors für den Zündkerzenstrom aufgenommen werden.

5. Verfahren nach Anspruch 3,
wobei eine Variation des durch die elektrische Maschine (3) bereitgestellten Drehmoments zu Druckschwankungen in Zylindern der Brennkraftmaschine (4) führt, die mittels des zeitlichen Verlaufs des Zündkerzenstroms ermittelt werden.

6. Verfahren nach einem der Ansprüche 1 bis 5,
wobei zusätzlich ein zeitlicher Verlauf des Zündkerzenstroms der Brennkraftmaschine (4) bestimmt wird, anhand dessen ebenfalls ein vom Drehwinkel der Welle (5) abhängiges Muster erkannt werden kann.

7. Verfahren nach Anspruch 1 oder 2,
wobei ein Zylinder der Brennkraftmaschine (4) vorgeheizt wird.

8. Verfahren nach Anspruch 1 oder 2,
wobei eine Kraftstoffeinspritzung an einem Zylinder der Brennkraftmaschine (4) durchgeführt und anhand des zeitlichen Verlaufs des durch die elektrische Maschine (3) bereitgestellten Drehmoments ermittelt wird, ob eine Zündung stattfindet.

9. Verfahren zur sensorlosen Regelung einer Motoranordnung (2) aus einer elektrischen Maschine (3) und einer durch eine gemeinsame Welle (5) mit der elektrischen Maschine (3) verbundenen Brennkraftmaschine (4), wobei das Verfahren folgendes aufweist:
- Bestimmen einer Drehzahl der elektrischen Maschine (3) durch Auswerten eines zeitlichen Verlaufs des durch die elektrische Maschine (3) bereitgestellten Drehmoments und
- Bestimmen eines Drehwinkels der Welle (5) mittels des Verfahrens nach einem der Ansprüche 1 bis 8.

10. Steuergerät (6) für ein Fahrzeug (1) zum Ermitteln eines Drehwinkels einer Welle (5), wobei die Welle (5) eine elektrische Maschine (3) mit einer Brennkraftmaschine (4) koppelt, wobei das Steuergerät (6) folgendes aufweist:
- zumindest eine Empfangsvorrichtung (9) ausgebildet zum Empfangen von Messwerten für Statorströme der elektrischen Maschine (3),
- eine erste Ermittlungsvorrichtung (10) ausgebildet zum Bestimmen eines zeitlichen Verlaufs eines durch die elektrische Maschine (3) bereitgestellten Drehmoments aus den Statorströmen der elektrischen Maschine (3);
- eine zweite Ermittlungsvorrichtung (11) ausgebildet zum Auswerten des zeitlichen Verlaufs, um ein vom Drehwinkel der Welle (5) abhängiges Muster des zeitlichen Verlaufs des durch die elektrische Maschine (3) bereitgestellten Drehmoments zu erkennen, und zum Bestimmen des Drehwinkels der Welle (5) aufgrund eines momentanen bereitgestellten Drehmoments und des Musters.

11. Steuergerät (6) nach Anspruch 10,
wobei das Steuergerät (6) zumindest eine Steuereinrichtung (12) zur Steuerung der Statorströme der elektrischen Maschine (3) aufweist.

12. Steuergerät (6) nach Anspruch 10 oder 11,
wobei die Empfangsvorrichtung (9) ferner ausgebildet ist zum Empfangen zumindest eines weiteren Parameters, der ausgewählt ist aus der Gruppe bestehend aus Messwerten für den Zündkerzenstrom, Signalen eines Klopfsensors, Signalen eines Luftmassensensors und Signalen einer Lambdasonde.

13. Motoranordnung (2) für ein Fahrzeug (1), die eine elektrische Maschine (3) und eine über eine gemeinsame Welle (5) mit der elektrischen Maschine (3) verbundene Brennkraftmaschine (4) aufweist, wobei die Motoranordnung (2) ferner ein Steuergerät (6) nach einem der Ansprüche 10 bis 12 zur Steuerung der elektrischen Maschine (3) und der Brennkraftmaschine (4) aufweist.

## Claims

1. Method for ascertaining a rotation angle of a shaft (5), wherein the shaft (5) couples an electrical machine (3) to an internal combustion engine (4), wherein the method comprises the following:
- determining a time profile of a torque, which is provided by the electrical machine (3), from stator currents of the electrical machine (3);
- evaluating the time profile in order to identify a pattern, which is dependent on the rotation angle of the shaft (5), of the time profile of the torque which is provided by the electrical machine (3), and
- determining a rotation angle of the shaft (5) on the basis of an instantaneous provided torque and the pattern.

2. Method according to Claim 1,
wherein the time profile of the torque has deflections when compression takes place in a cylinder of the internal combustion engine (4).

3. Method according to Claim 1 or 2,
wherein the internal combustion engine (4) comprises a plurality of cylinders and an ignition sequence of the cylinders has at least one irregularity,
wherein the step of evaluating the time profile uses the irregularity in order to identify a pattern, which is dependent on the rotation angle of the shaft (5), of the time profile of the torque which is provided by the electrical machine (3).

4. Method according to Claim 3,
wherein a variation in the torque which is provided by the electrical machine (3) leads to vibrations which are picked up by means of a knocking sensor and/or a sensor for the spark plug current.

5. Method according to Claim 3,
wherein a variation in the torque which is provided by the electrical machine (3) leads to pressure fluctuations in cylinders of the internal combustion engine (4), which pressure fluctuations are ascertained by means of the time profile of the spark plug current.

6. Method according to one of Claims 1 to 5,
wherein a time profile of the spark plug current of the internal combustion engine (4) is additionally determined, it being possible for a pattern which is dependent on the rotation angle of the shaft (5) to likewise be identified on the basis of the said time profile.

7. Method according to Claim 1 or 2,
wherein a cylinder of the internal combustion engine (4) is preheated.

8. Method according to Claim 1 or 2,
wherein fuel injection is carried out at one cylinder of the internal combustion engine (4) and the time profile of the torque which is provided by the electrical machine (3) is used to ascertain whether ignition takes place.

9. Method for sensor-free regulation of a motor arrangement (2) comprising an electrical machine (3) and an internal combustion engine (4) which is connected to the electrical machine (3) by a common shaft (5), wherein the method comprises the following:
- determining a rotation speed of the electrical machine (3) by evaluating a time profile of the torque which is provided by the electrical machine (3), and
- determining a rotation angle of the shaft (5) by means of the method according to one of Claims 1 to 8.

10. Controller (6) for a vehicle (1) for ascertaining a rotation angle of a shaft (5), wherein the shaft (5) couples an electrical machine (3) to an internal combustion engine (4), wherein the controller (6) comprises the following:
- at least one receiving apparatus (9) which is designed for receiving measurement values for stator currents of the electrical machine (3),
- a first ascertaining apparatus (10) which is designed for determining a time profile of a torque, which is provided by the electrical machine (3), from the stator currents of the electrical machine (3);
- a second ascertaining apparatus (11) which is designed for evaluating the time profile, in order to identify a pattern, which is dependent on the rotation angle of the shaft (5), of the time profile of the torque which is provided by the electrical machine (3), and for determining the rotation angle of the shaft (5) on the basis of an instantaneous provided torque and the pattern.

11. Controller (6) according to Claim 10,
wherein the controller (6) has at least one control device (12) for controlling the stator currents of the electrical machine (3).

12. Controller (6) according to Claim 10 or 11,
wherein the receiving apparatus (9) is further designed to receive at least one further parameter which is selected from the group comprising measurement values for the spark plug current, signals of a knocking sensor, signals of an air mass sensor and signals of a lambda probe.

13. Motor arrangement (2) for a vehicle (1) which has an electrical machine (3) and an internal combustion engine (4) which is connected to the electrical machine (3) by means of a common shaft (5), wherein the motor arrangement (2) further has a controller (6) according to one of Claims 10 to 12 for controlling the electrical machine (3) and the internal combustion engine (4).

## Revendications

1. Procédé de détermination d'un angle de rotation d'un arbre (5), dans lequel l'arbre (5) couple un moteur électrique (3) à un moteur à combustion interne (4), dans lequel le procédé comprend les étapes suivantes :
- la détermination d'une variation dans le temps d'un couple fourni par le moteur électrique (3) à partir de courants de stator du moteur électrique (3) ;
- l'évaluation de la variation dans le temps, afin de détecter un motif, dépendant de l'angle de rotation de l'arbre (5), de la variation dans le temps du couple fourni par le moteur électrique (3), et
- la détermination de l'angle de rotation de l'arbre (5) sur la base d'un couple fourni momentanément et du motif.

2. Procédé selon la revendication 1,
dans lequel la variation dans le temps du couple présente des écarts lorsqu'une compression se produit dans un cylindre du moteur à combustion interne (4).

3. Procédé selon la revendication 1 ou 2,
dans lequel le moteur à combustion interne (4) comprend plusieurs cylindres et une séquence d'allumage des cylindres présente au moins une irrégularité,
dans lequel les étapes de l'évaluation de la variation dans le temps utilisent l'irrégularité afin de détecter un motif, dépendant de l'angle de rotation de l'arbre (5), de la variation dans le temps du couple fourni par le moteur électrique (3).

4. Procédé selon la revendication 3,
dans lequel une variation du couple fourni par le moteur électrique (3) provoque des vibrations qui sont acquises au moyen d'un capteur de cognement et/ou d'un capteur du courant de bougie d'allumage.

5. Procédé selon la revendication 3,
dans lequel une variation du couple fourni par le moteur électrique (3) provoque, dans des cylindres du moteur à combustion interne (4), des variations de pression qui sont déterminées au moyen de la variation dans le temps du courant de bougie d'allumage.

6. Procédé selon l'une quelconque des revendications 1 à 5,
dans lequel une variation dans le temps du courant de bougie d'allumage du moteur à combustion interne (4) est en outre déterminée, sur la base de laquelle un motif dépendant également de l'angle de rotation de l'arbre (5) peut être détecté.

7. Procédé selon la revendication 1 ou 2,
lequel un cylindre du moteur à combustion interne (4) est préchauffé.

8. Procédé selon la revendication 1 ou 2,
dans lequel une injection de carburant est effectuée au niveau d'un cylindre du moteur à combustion interne (4) et il est déterminé, sur la base de la variation dans le temps du couple fourni par le moteur électrique (3), si un allumage se produit.

9. Procédé pour réguler sans capteur un système de motorisation (2) constitué d'un moteur électrique (3) et d'un moteur à combustion interne (4) relié au moteur électrique (3) par l'intermédiaire d'un arbre commun (5), dans lequel le procédé comprend les étapes suivantes :
- la détermination d'une vitesse de rotation du moteur électrique (3) par évaluation d'une variation dans le temps du couple fourni par le moteur électrique (3) et
- la détermination d'un angle de rotation de l'arbre (5) au moyen du procédé selon l'une quelconque des revendications 1 à 8.

10. Appareil de commande (6) destiné à un véhicule (1) pour déterminer un angle de rotation d'un arbre (5), dans lequel l'arbre (5) couple un moteur électrique (3) à un moteur à combustion interne (4), dans lequel l'appareil de commande (6) comprend :
- au moins un dispositif de réception (9) conçu pour recevoir des valeurs de mesure de courants de stator du moteur électrique (3),
- un premier dispositif de détermination (10) conçu pour déterminer une variation dans le temps d'un couple fourni par le moteur électrique (3) à partir des courants de stator du moteur électrique (3) ;
- un second dispositif de détermination (11) conçu pour évaluer la variation dans le temps, afin de détecter un motif, dépendant de l'angle de rotation de l'arbre (5), de la variation dans le temps du couple fourni par le moteur électrique (3), et pour déterminer l'angle de rotation de l'arbre (5) sur la base d'un couple fourni momentanément et du motif.

11. Appareil de commande (6) selon la revendication 10, dans lequel l'appareil de commande (6) comporte au moins un dispositif de commande (12) destiné à commander les courants de stator du moteur électrique (3).

12. Appareil de commande (6) selon la revendication 10 ou 11,
dans lequel le dispositif de réception (9) est en outre conçu pour recevoir au moins un autre paramètre qui est sélectionné dans le groupe constitué de valeurs de mesure du courant de bougie d'allumage, de signaux d'un capteur de cognement, de signaux d'un capteur de masse d'air et de signaux d'une sonde lambda.

13. Système de motorisation (2) destiné à un véhicule (1), qui comporte un moteur électrique (3) un moteur à combustion interne (4) relié au moteur électrique (3) par l'intermédiaire d'un arbre commun (5), dans lequel le système de motorisation (2) comporte en outre un appareil de commande (6) selon l'une quelconque des revendications 10 à 12, pour commander le moteur électrique (3) et le moteur à combustion interne (4).
